Europäisches Patentamt

European Patent Office

Office européen des brevets

(11) Publication number: **0 010 933**
**A1**

## (12) EUROPEAN PATENT APPLICATION

(21) Application number: 79302344.1

㉒ Date of filing 26.10.79

(51) Int. Cl.³: **B 62 K 27/12**

(30) Priority: **28.10.78 GB 4237078**

(43) Date of publication of application: **14.05.80**
**Bulletin 80/10**

(84) Designated Contracting States: **AT BE CH DE FR GB IT LU NL SE**

(71) Applicant: **Turner, Philip Wilson, 208 Cambridge Road, Great Shelford Cambridge (GB)**

(72) Inventor: **Turner, Philip Wilson, 208 Cambridge Road, Great Shelford Cambridge (GB)**

(74) Representative: **Allen, Oliver John Richard et al, Lloyd Wise, Tregear & Co. Norman House 105-109 Strand, London, WC2R 0AE (GB)**

(54) Improvements relating to hitches for trailers.

㊐ Hitching a trailer (6, 8) to a towing single-track vehicle (12) in which the draw bar (2) of the trailer (6, 8) is linked to the towing vehicle (12) by a point of attachment (16) which allows pivotal movement about a substantially vertical axis. The point of attachment (16) is at a distance of less than the radius of the rear wheel from the centre of the rear wheel.

=1=

## IMPROVEMENTS RELATING TO HITCHES FOR TRAILERS

This invention relates to a method of hitching a trailer to a towing vehicle which is a bicycle, moped, motorcycle or like two-wheeled machine.

It is usual for such trailers to be attached to the towing vehicle at a point above the rear wheel and behind the saddle by means of a suitably shaped draw bar. This arrangement has a deleterious effect upon the handling of the vehicle due to the height of the hitching point since the side forces on the vehicle generated by the trailer have a great effect as they act towards the top of the vehicle. This effect is particularly noticeable on cornering. Furthermore, this arrangement drastically reduces the bracking efficiency of the vehicle and upon heavy braking tends to lift the rear wheel of the vehicle off the ground, particularly when the trailer is heavily laden. The use of a hitch positioned behind the saddle cannot be conveniently used with a pillion passenger is being carried or a saddle bag or like pannier is used.

It has been proposed to provide a hitching point behind the rear wheel at the height of the rear axle. However, this arrangement requires a complex towing bracket which must be attached to the vehicle at three or more points, generally either side of the axle and behind the saddle. The use of such towing brackets may prevent the carriage of a pillion passenger and the use of a saddle bag or the like.

The present invention provides a method of hitching a trailer to a towing vehicle which is a bicycle, moped, motorcycle or like machine, in which the draw bar of the trailer is linked to the towing vehicle by a point of attachment allowing pivotal movement about a substantially vertical axis characterised in that the point of attachment is made at a distance less than the radius of the rear wheel from the centre of the rear wheel.

The point of attachment to the towing vehicle is preferably within a distance of half the radius of the rear wheel from the centre of the rear wheel, more preferably substantially at a little above or below the height of the rear axle and adjacent one end of the rear axle. This positioning of the point of attachment reduces the effect of the trailer on the towing vehicle to a minimum. The handling of the towing vehicle is considerably improved over the arrangement with the point of attachment behind the saddle and there is a much reduced tendency for the rear wheel of the towing vehicle to lift on braking. Furthermore, the point of attachment may be effected by means of a simple bracket attached to the vehicle which does not interfer with the vehicles ability to carry a pillion passenger or saddle bag.

The hitching arrangement of the invention may be used in conjunction with a short draw bar attached to the trailer so that the trailer is positioned immediately behind the rear wheel of the vehicle. A longer draw bar may also be used if desired. In order to allow steering of the towing vehicle the draw bar is swept outwards to clear the rear wheel of the towing vehicle and is attached to the latter through a pivot allowing pivotal movement about the vertical axis. The attachment may be a simple pivot comprising a vertical shaft engaged in a hole defined by a plate, optionally combined with an elastomeric bush, or ball joint, slightly offset from the centre line of the vehicle in order to clear the rear wheel or a virtual pivot allowing the effective hinge point to lie on the centre line of the vehicle. The hitch may incorporate a quick release device to facilitate coupling and uncoupling. Preferably the hitch only allows limited pivotal movement about a horizontal axis so that the trailer will support the vehicle when parked.

The hitch arrangement may advantageously be combined with a light box-like trailer, the body of which may be constructed of glass or fibre reinforced plastics or non-reinforced plastics or wood, mounted on or within a frame, preferably constructed of steel or aluminium, or wood, in such a manner that the low torsional stiffness of the body is substantially increased by the construction and disposition of the frame. To this end the frame may consist of two parallel side members joined by one or more torsionally stiff cross members, such as a tube. The outer ends of the trailer axles may be carried in these side members.

The invention will now be illustrated by the accompanying drawings, in which:

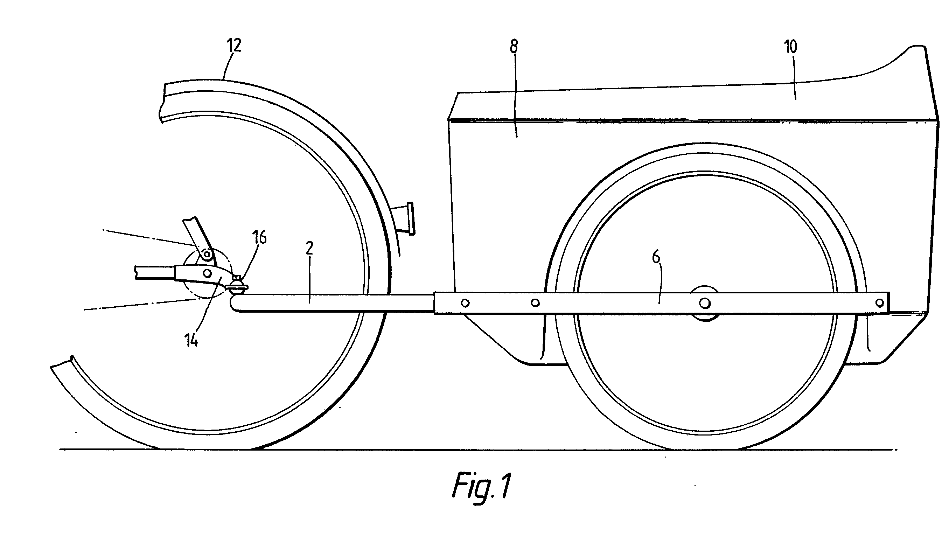

Figure 1 represents a side view of the rear of a vehicle with a trailer attached,

Figure 2 represents a plan view of the combination of Figure 1,

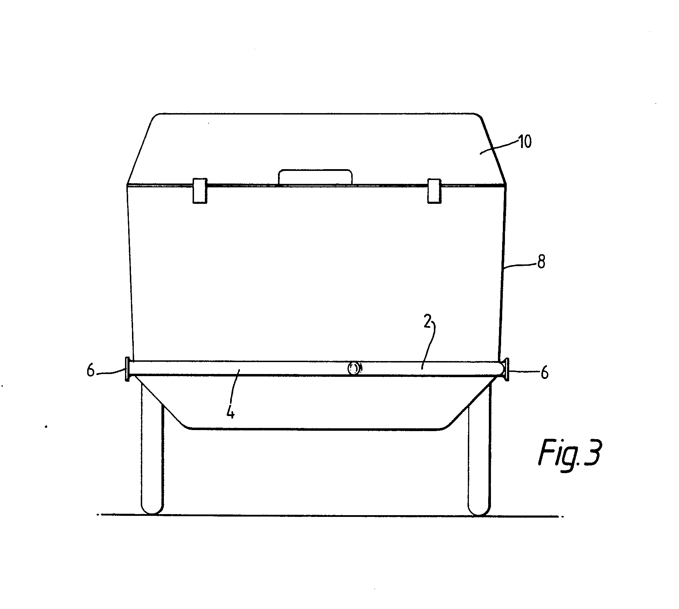

Figure 3 represents a front view of the trailer shown in Figures 1 and 2,

Figure 4 represents a plan view of a towing bracket for attachment to a towing vehicle, and

Figure 5 represents a side view of the towing bracket of Figure 4 showing the attachment of the draw bar of the trailer.

A tubular draw bar 2 is attached to a cross-tube 4 linking two side members 6. ·The trailer body 8 is mounted between the side members 6 and is fitted with a lid 10 which may be hinged and/or removable. When the trailer is used for carrying a passenger, the lid 10 may be of a transparent plastics material.

The draw bar 2 is attached to the towing vehicle 12, e.g. a bicycle, through a bracket 14 mounted on the vehicle and a shaft 16 mounted on the draw bar which co-operates with the bracket to allow pivotal movement about the vertical axis of the shaft. The bracket 14 may be held in place by means of one of the axle nuts optionally together with other clips and is shaped so that the pivot point of attachement is slightly below and behind the rear axle.

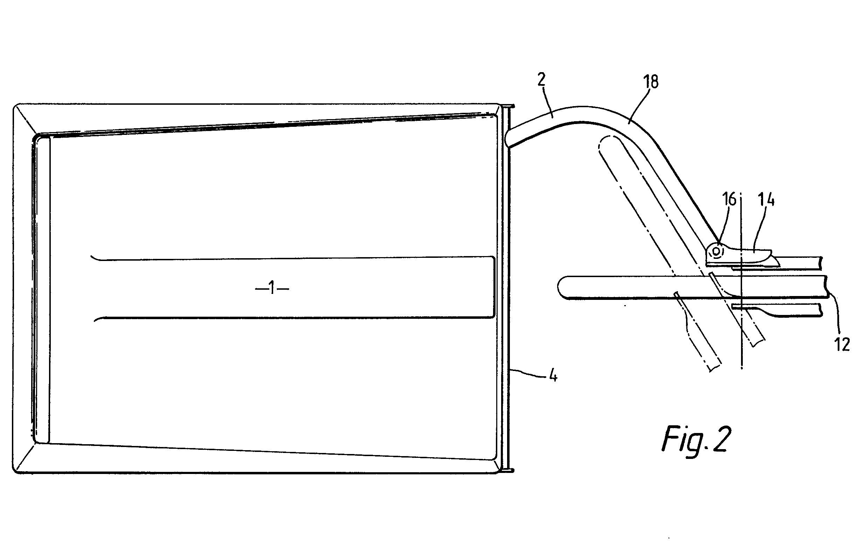

The draw bar 2 is swept outwardly at 18 in order to allow steering of the towing vehicle. The dotted lines in Figure 2 show the positioning of the rear wheel of the towing vehicle undergoing a right turn.

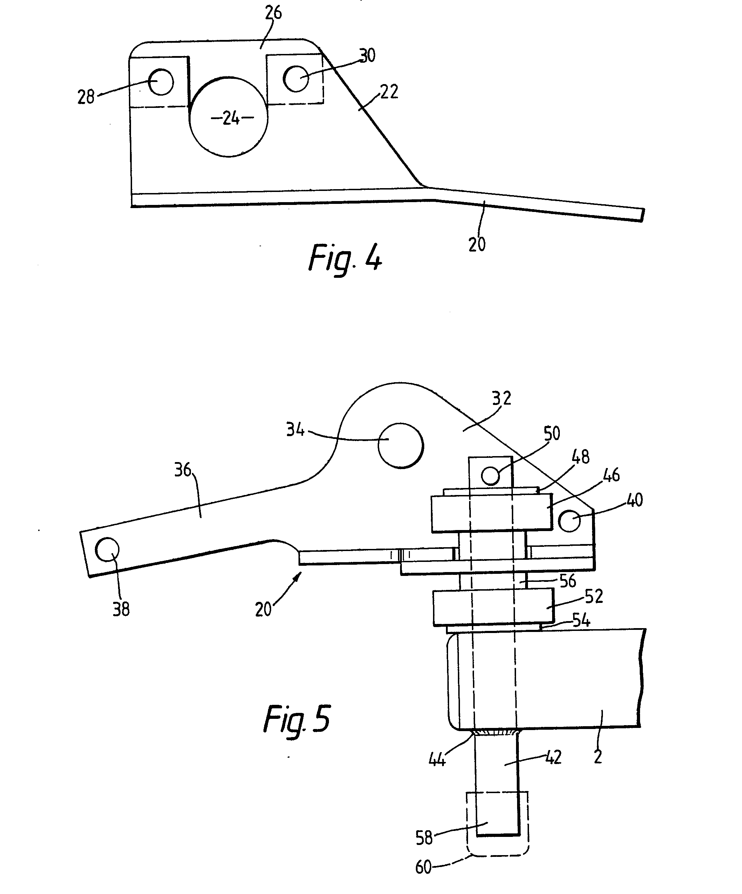

Figure 4 illustrates a simple bracket for use in the invention. The bracket 20 includes a plate portion 22 which is substantially horizontal when the bracket is fitted to the towing vehicle. A circular aperture 24 is defined by the plate portion 22 and a hinged gate 26. The hinged gate is pivotted at 28 and may be secured in the closed position by a bolt or padlock hasp passing through apertures 30 in the hinged gate 26 and plate 22. The provision of the hinged gate facilitates coupling and uncoupling and the use of a padlock to secure the gate provides security for the trailer.

The bracket 20 includes a side portion 32 having an aperture 34 whereby the bracket may be fitted over the rear axle of the vehicle and held in place with the axle nut. The side portion 32 may include an extended portion 36 to extend along one of the stays of the vehicle. A clip may be passed around the stay and attached to the portion 36 by a bolt or the like through aperture 38. The side portion 32 may also include an aperture 40 for attachment of a stay for the mudguard.

Figure 5 illustrates the draw bar 2 attached to bracket 20. At the end of the draw bar 2 there is a shaft 42 secured, e.g. by a weld 44. The shaft 42 extends through the aperture 24 of the towing bracket 20. In order to prevent disengagement of the shaft 42 a thick washer 46 of elastomeric material, e.g. having a Shore hardness of 60 to 65, is held in place by a metallic washer 48 and split pin 50 at the top of the shaft. Similarly shaft 42 is provided with an elastomeric washer 52 held in place by a metallic washer 54 positioned beneath the towing bracket. As well as maintaining the shaft 42 in the correct position, the elastomeric washers provide a suspension system for the hitching arrangement. The shaft 42 may be covered by a sleeve 56, e.g. of polyurethane or neoprene, at the point of engagement with the towing bracket in order to reduce friction and rattling of the hitching arrangement. The aperture 24 of the towing bracket and the diameter of the sleeve 56 are selected to provide a loose fit thereby facilitating easy pivotal movement about the axis of the shaft. The lower end of the shaft 42 may include an extended portion 58 protected by a rubber ferrule 60 to provide a leg for resting the draw bar when the trailer is detached from the towing vehicle.

=1=

CLAIMS:

1.    A method of hitching a trailer to a towing vehicle which is a bicycle, moped, motorcycle or like machine, in which the draw bar of the trailer is linked to the towing vehicle by a point of attachment allowing pivotal movement about a substantially vertical axis CHARACTERISED IN THAT the point of attachment is made at a distance of less than the radius of the rear wheel from the centre of the rear wheel.

2.    A method of hitching as claimed in Claim 1 in which the point of attachment is made at or a little above or below the height of the rear axle.

3.    A method of hitching as claimed in Claim 1 or Claim 2 in which the point of attachment is made adjacent to one end of the rear axle.

4.    A method of hitching as claimed in Claim 1 in which the point of attachment is made in a vertical plane containing the longitudinal axis of the vehicle.

5.    The combination of a trailer and a towing vehicle which is a bicycle, moped, motorcycle or like machine, in which the draw bar of the trailer is linked to the towing vehicle by a point of attachment allowing pivotal movement about a substantially vertical axis CHARACTERISED IN THAT the point of attachment is at a distance of less than the radius of the rear wheel from the centre of the rear wheel.

6. The combination as claimed in Claim 5 in which the point of attachment is at or just below the height of the rear axle.

7. The combination as claimed in Claim 5 or Claim 6 in which the point of attachment is adjacent to one end of the rear axle.

8. The combination as claimed in Claim 5 in which the attachment comprises a vertical shaft mounted on one of the combination engaged in a hole defined by a horizontal plate mounted on the other of said combination said shaft fitting loosely in said hole to allow pivotal movement about the vertical axis of the shaft and limited movement about a horizontal axis.

9. The combination as claimed in Claim 8 in which the shaft is attached to the draw bar of the trailer and the plate is attached to· the vehicle.

10. The combination as claimed in Claim 8 or Claim 9 in which a portion of the perimeter of the hole is defined by a hinged gate which may be opened to facilitate removal of the shaft.

Fig.1

Fig.2

Fig.3

Fig. 4

Fig. 5

European Patent
Office

**EUROPEAN SEARCH REPORT**

Application number

EP 79 302 344.1

| | DOCUMENTS CONSIDERED TO BE RELEVANT | | CLASSIFICATION OF THE APPLICATION (Int. Cl.) |
|---|---|---|---|
| Category | Citation of document with indication, where appropriate, of relevant passages | Relevant to claim | |
| | DE – C – 863 308 (G. OVERBECK)<br>* fig. 1 and 2 * | 1–3,<br>5–7 | B 62 K 27/12 |
| | DE – C – 309 080 (C. KÜKE)<br>* fig. 1 * | 1–3,<br>5–7 | |
| | FR – A – 906 620 (J. VERCHERE)<br>* fig. 1 and 2 * | 1–3,<br>5–7 | |
| | US – A – 3 993 320 (R.S. ROBINSON)<br>* fig. 1 and 2 * | 1–3,<br>5–7 | TECHNICAL FIELDS SEARCHED (Int.Cl.)<br><br>B 62 K 27/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 27-12-1979 | BECKER |

EPO Form 1503.1 06.78